# EUROPÄISCHE PATENTSCHRIFT

(11) **EP 1 568 914 B1**
(45) Veröffentlichungstag und Bekanntmachung des Hinweises auf die Patenterteilung: **26.09.2007**
(21) Anmeldenummer: 05011837.1
(22) Anmeldetag: 13.05.2000
(51) Int. Cl.: F16F 15/139

(54) **Torsionsschwingungsdämpfer und Verfahren zum Dämpfen von Torsionsschwingungen**
Torsional vibration damper and its method of production
Amortisseur de vibrations torsionelles et sa méthode de production

(30) Priorität: 04.06.1999 DE 19925487; 27.08.1999 DE 19940793
(43) Veröffentlichungstag der Anmeldung: 31.08.2005
(62) Teilanmeldung aus: 00110331.6
(73) Patentinhaber: Rohs-Voigt Patentverwertungsgesellschaft mbH, 52351 Düren (DE)
(72) Erfinder: Heidingsfeld, Dietmar, Dipl.-Ing., 52078 Aachen (DE)
(74) Vertreter: Reuther, Martin

(56) Entgegenhaltungen:
- EP-A- 0 863 330
- DE-A- 19 817 906
- US-A- 1 840 655
- US-A- 5 072 818
- US-A- 5 569 088

## Beschreibung

Die Erfindung betrifft einen Torsionsschwingungsdämpfer sowie ein Verfahren zum Dämpfen von Torsionsschwingungen.

Derartige Torsionsschwingungsdämpfer sind in einer Vielzahl von konkreten Ausführungsformen bekannt. Ein wesentlicher Schwerpunkt bei der baulichen Gestaltung derartiger Torsionsschwingungsdämpfer liegt darin, dass die Dämpfungseigenschaften eines derartigen Torsionsschwingungsdämpfers in geeigneter Weise beeinflusst werden sollen. Beispielsweise ergibt sich die Forderung, dass bei kleinen Drehamplituden zwischen den Massen nur wenig Dämpfung auftreten soll, während bei großen Amplituden eine hohe Dämpfung erwünscht ist. Gleichzeitig soll bei großen Drehgeschwindigkeiten eine hohe Dämpfung auftreten, während bei geringen Drehgeschwindigkeiten nur wenig Dämpfung erfolgen soll.

Torsionsschwingungsdämpfer mit zwei gegeneinander drehbeweglich gelagerten Massen und einer zwischen den Massen wirksamen Reibeinrichtung, die einen mitschleppenden Keil umfasst, der in einer wenigstens teilweise mit einem viskosen Zusatzmittel gefüllten Kammer angeordnet ist, sind beispielsweise aus der DE 198 17 906 A1, der als nächstliegender Stand der Technik geltenden EP 0 863 330 A1, der US 5,072,818 bzw. der US 5,569,088 bekannt. Die dort offenbarten Anordnungen weisen jedoch eine Vielzahl an Baugruppen auf, die sehr komplex miteinander wechselwirken müssen, um geeignete Dämpfungen zu ermöglichen.

Es ist Aufgabe vorliegender Erfindung, einen Torsionsschwingungsdämpfer bzw. ein entsprechendes Dämpfungsverfahren bereitzustellen, bei welchen auf möglichst einfache konstruktive Weise eine hohe Variabilität in der Anpassung der Dämpfungscharakteristik ermöglicht ist.

Als Lösung schlägt die Erfindung einerseits ein Verfahren zum Dämpfen von Torsionsschwingungen mittels eines Torsionsschwingungsdämpfers mit zwei gegeneinander drehbeweglich gelagerten Massen und mit einer zwischen den Massen wirksamen Reibeinrichtung vor, die einen mitschleppenden Doppelkeil umfasst, der in einer wenigstens teilweise mit einem viskosen Zusatzmittel gefüllten Kammer angeordnet ist, welches Verfahren sich dadurch auszeichnet, dass bei einer Relativbewegung der beiden Massen der Doppelkeil bezüglich einer Achse des Torsionsschwingungsdämpfers gekippt wird.

Darüber hinaus schlägt die Erfindung als Lösung einen Torsionsschwingungsdämpfer mit zwei gegeneinander drehbeweglich gelagerten Massen und mit einer zwischen den Massen wirksamen Reibeinrichtung vor, die einen mitschleppenden Keil umfasst, der in einer wenigstens teilweise mit einem viskosen Zusatzmittel gefüllten, Wände aufweisenden Kammer, angeordnet ist, wobei der Doppelkeil derart angeordnet ist, dass er bei einer Relativbewegung der beiden Massen eine Kippbewegung bezüglich einer Achse des Torsionsschwingungsdämpfers ausführt.

Hierbei ist insbesondere zu betonen, dass zwar die Anordnung nach der US 5,072,818 ebenfalls Vorsprünge an den dort offenbarten Keilen aufweist. Diese weisen jedoch nicht von den Keilen weg, und schaffen auf diese Weise Zwischenräume, die eine erhöhte Aufnahmekapazität für das viskose Zusatzmittel ermöglichen, sondern stellen nach innen, von den Wandungen einer die Keile aufnehmenden Kammer wegweisende Hinterschneidungen dar, die lediglich Befestigungszwecken dienen.

Im vorliegenden Zusammenhang bezeichnet der Begriff "mitschleppend" eine Baugruppe, die derart zwischen den beiden Massen angeordnet ist, dass diese im Rahmen einer möglichen Relativbewegung der beiden Massen zueinander dieser Bewegung folgen kann, wenn die Reibung vernachlässigt wird. Anders ausgedrückt, behindert bei Vernachlässigung der Reibung eine mitschleppende Baugruppe die Relativbewegung zwischen den beiden drehbeweglich gelagerten Massen des Torsionsschwingungsdämpfers nicht.

Darüber hinaus beschreibt im vorliegenden Zusammenhang der Begriff "Keil" eine Baugruppe mit zwei einander gegenüberliegenden Oberflächenbereichen, deren Abstand sich entlang der Oberflächenbereich verändert. Insbesondere kann ein derartiger Keil zwischen zwei Reibflächen vorgesehen sein, deren Abstand sich entlang des Umfangs des Torsionsschwingungsdämpfers verändert. Vorteilhafterweise verändert sich der Abstand der Reibflächen gleichgerichtet wie der Abstand der entsprechenden Keilflächen, wobei der Grad der Veränderungen jedoch nicht identisch gewählt werden muss, sondern den jeweiligen Erfordernissen angepasst werden kann.

Insbesondere kann der Keil zwischen zwei Reibflächen mit im Wesentlichen axialen Oberflächen angeordnet sein. Eine derartige Anordnung bedingt ein im Wesentlichen radiales Fließen der bei einem Verkeilen auftretenden Kräfte. Derartige radial gerichtete Kräfte können bei im Wesentlichen drehsymmetrischen Torsionsschwingungsdämpfern besonders einfach kompensiert werden.

Auf komplexe Oberflächenberechnungen und Oberflächenbearbeitungen kann verzichtet werden, wenn wenigstens eine der Oberflächen, sei es eine Keilfläche oder eine Reibfläche, zumindest im Bereich der Wechselwirkung zwischen Keil und Reibfläche teilzylinderförmig ausgebildet ist. Im vorliegenden Zusammenhang beschreibt der Begriff teilzylinderförmig einen Oberflächenbereich, dessen Gestaltung einem Mantelsegment eines Zylinders entspricht.

Einerseits kann wenigstens eine der zylinderförmig ausgebildeten Oberflächen eine Zylinderachse, die der Hauptdrehachse des Torsionsschwingungsdämpfers entspricht, aufweisen. Hierdurch kann, wie unmittelbar ersichtlich, eine Oberfläche bereitgestellt werden, die ein Mitschleppen ermöglicht.

Andererseits kann wenigstens eine der zylinderförmig ausgebildeten Oberflächen bezüglich der Rotationsachse des Torsionsschwingungsdämpfers parallelversetzt angeordnet sein. Hierdurch lassen sich auf konstruktiv verhältnismäßig einfache Art und Weise abstandsveränderliche Oberflächen bereitstellen, insbesondere wenn diese einer anderen teilzylinderförmigen Oberfläche mit einem anderen Radius und/oder mit einer anderen Achsenlage zugeordnet sind.

In entsprechender Weise kann der Keil wenigstens eine teilzylinderförmige Keilfläche aufweisen. Hierbei kann der Radius einem entsprechenden Oberflächenbereich einer entsprechenden Reibfläche, an welcher der Keil anliegt, entsprechen. Der identische Radius bedingt dann, dass der Keil über eine verhältnismäßig große Oberfläche in Wechselwirkung mit der Reibfläche treten kann, wodurch vorteilhafte Reibeigenschaften erzielt werden können.

Mit ihrer großen Bandbreite hinsichtlich der Dämpfungscharakteristik eignet sich die erfindungsgemäße Reibeinrichtung insbesondere als Zusatzreibeinrichtung eines Torsionsschwingungsdämpfers, bei welchem die beiden Massen mittels wenigstens einer Feder-Reib-Einrichtung miteinander wirkverbunden sind. In einem derartigen Falle umfasst der Torsionsschwingungsdämpfer somit einerseits eine Feder-Reib-Einrichtung, welche einerseits ein elastisches Rückstellmoment in Richtung auf eine Ruhelage des Torsionsschwingungsdämpfers und andererseits aufgrund der Reibung dämpfende Eigenschaften aufweist, sowie eine erfindungsgemäße Reibeinrichtung mit einem mitschleppenden Doppelkeil als separate Baugruppe.

Vorteilhafterweise ist die Reibeinrichtung bis auf die Eigenelastizität des Keils sowie der entsprechenden Reibflächen, die mit dem Keil wechselwirken, starr ausgebildet. Dieses bedeutet, dass die Reibeinrichtung insbesondere keinerlei federelastische Zusatzeinrichtung, wie Spiralfedern oder Federbügel, umfassen soll.

Der erfindungsgemäße Keil ist als Doppelkeil ausgebildet. Hierdurch lässt sich auf baulich verhältnismäßig einfache Weise der Tatsache Rechnung tragen, dass Torsionsschwingungen in verschiedenen Drehrichtungen auftreten können. Darüber bewirkt ein derartiger Doppelkeil, dass der Doppelkeil aufgrund einer Relativbewegung der beiden Massen des Torsionsschwingungsdämpfers zu einer Kippbewegung angeregt wird, die eine Keilwirkung bzw. eine Reibwirkung vorteilhaft beeinflusst.

Vorzugsweise weist der Doppelkeil im Wesentlichen eine Nierenform auf. Eine derartige Form ist verhältnismäßig kompakt und kann somit relativ große Kräfte aufnehmen. Darüber hinaus kann eine derartige Form in konstruktiv einfacher Weise angepasst werden, die ein Mitschleppen erlaubt.

Der Doppelkeil kann zumindest zwei teilzylinderförmige, voneinander beabstandete Keilflächen mit im Wesentlichen identischem Radius aufweisen. Derartige Oberflächenbereiche können ohne weiteres an einer durchgehenden zylindrischen Reibfläche des übrigen Torsionsschwingungsdämpfers anliegen, wodurch auf konstruktiv verhältnismäßig einfache Weise die Gesamtanordnung aufgebaut werden kann.

Insbesondere können die beiden Keilflächen um dieselbe Achse ausgebildet sein, so dass der Doppelkeil mit beiden teilzylinderförmigen Keilflächen auf einer durchgehenden zylinderförmigen Reibfläche aufliegen kann.

Andererseits können die beiden Keilflächen auch um zueinander parallel versetzte Achsen ausgebildet sein. Hierdurch wird gewährleistet, dass der Doppelkeil bei einem Verkippen desselben mit einer möglichst großen Oberfläche an der Reibfläche anliegen kann.

Zwischen diesen beiden Keilflächen kann eine Ausnehmung vorgesehen sein, wodurch einerseits ein Verkippen und andererseits ein unstetiger Übergang zwischen zwei an einer Reibfläche anliegenden Oberflächenbereichen vermieden werden kann. Ebenso ist es auch möglich, zwischen diesen beiden Keilflächen eine teilzylinderförmige Verbindungsfläche mit einem kleineren Radius als dem Radius der beiden Keilflächen vorzusehen. Auch hierdurch lassen sich Unstetigkeiten reduzieren, dieses insbesondere dann, wenn an dem Übergang zwischen Keilfläche und Verbindungsfläche dieselbe Tangente gewählt wird.

Erfindungsgemäß ist der Doppelkeil derart angeordnet, dass er bei einer Relativbewegung der beiden Massen eine Kippbewegung bezüglich einer Achse des Torsionsschwingungsdämpfers ausführt. Über eine derartige Kippbewegung können dann geeignete Oberflächenbereiche des Doppelkeils in Reibköntakt mit entsprechenden Reibflächen gebracht werden.

Damit die Reibeinrichtung auch bei kleinsten Verdrehwinkeln bereits eine Dämpfung bewirkt, diese Dämpfung aber in kontrollierbarer Weise ausreichend niedrig ausfällt, kann der Keil in einer wenigstens teilweise mit einem viskosen Zusatzmittel gefüllten Kammer angeordnet sein. Hierbei sorgt das viskose Zusatzmittel für die notwendige Initialkraft. Insbesondere gewährleistet eine derartige Initialkraft zuverlässig, dass der Keil nicht in undefinierter Weise mitgeschleppt wird, bevor seine verkeilende und selbstverstärkende Wirkung einsetzt. Das viskose Zusatzmittel ermöglicht eine geschwindigkeitsabhängige Reibung, die auch bei kleinsten Schwingungsamplituden bereits wirksam ist. Darüber hinaus verhindert diese Anordnung in zuverlässiger Weise, dass ein unnötiges Freispiel, welches die Dämpfung in unvorhersehbarer Weise beeinflusst, auftritt.

Der Keil kann wenigstens einen Vorsprung aufweisen. Hierdurch lässt sich der Widerstand gegen Scherkräfte des viskosen Zusatzmittels erhöhen, wodurch die Gesamtwirkung des viskosen Zusatzmittels entsprechend erhöht wird. Diese Wirkerhöhung folgt unmittelbar aus der größeren Angriffsfläche, die ein derartiger Vorsprung erzeugt. Darüber hinaus schafft der Vorsprung in einem den Keil umschließenden Raum bzw. in einer den Keil umschließenden Kammer ein vergrößertes Raumvolumen zur Aufnahme von viskosem Zusatzmittel.

Als viskoses Zusatzmittel können beispielsweise geeignete Fette Verwendung finden.

Vorzugsweise ist der wenigstens eine Vorsprung an einer Seite des Keils vorgesehen, die nicht als Keilfläche zur Anwendung kommt. Auf diese Weise wird die Keilfläche, die wirksam werden kann, nicht reduziert, während die vorteilhaften Wirkungen eines derartigen Vorsprungs genutzt werden können.

Insbesondere kann der Vorsprung in Axialrichtung weisen, wodurch einerseits in Umfangrichtung weisende Oberflächenbereiche, die besonders ausgeprägt mit dem viskosen Zusatzmittel wechselwirken, entstehen und andererseits eine Zusatzreibung an Wänden einer Kammer, welche den Keil umgibt, gewährleistet werden kann, die eine Keilwirkung, die in radialer Richtung stattfindet, nicht beeinträchtigt.

Eine verhältnismäßig einfache Montage bzw. Fertigung des Torsionsschwingungsdämpfers kann dadurch erreicht werden, dass die Kammer zumindest an einer radialen Seite zumindest teilweise durch ein Blech abgedeckt ist. Im vorliegenden Zusammenhang beschreibt der Begriff einer radialen Seite der Kammer, die durch eine radial gerichtete Oberfläche abgedeckt bzw. geschlossen werden kann. Dem entsprechend beschreibt der Begriff einer axialen Oberfläche eine Oberfläche, die eine zur Achse des Torsionsschwingungsdämpfers parallele Oberflächenkomponente aufweist.

Ebenso ist es möglich, dass die Kammer zumindest an einer radialen Seite zumindest teilweise durch ein Blech abgedeckt ist. Auch hierdurch lässt sich die Montage bzw. Fertigung des Torsionsschwingungsdämpfers vorteilhaft vereinfachen. Insbesondere kann an derartigen Blechen Profilierungen wie beispielsweise eine Ausbildung von nicht rotationssymmetrischen Zylinderformen oder ähnliches, leicht vorgenommen werden.

Das Blech kann aus Stabilitätsgründen bzw. um eine Verbindung mit anderen Baugruppen zu ermöglichen, eine Bördelung aufweisen. Insbesondere ist es möglich, das Blech derart zu bördeln, dass es mittels der Bördelung an einer der Massen des Torsionsschwingungsdämpfers fixiert ist. Beispielsweise kann die Bördelung einen im Wesentlichen radialen Reibschluss zwischen dem Blech und der Masse bilden.

Es versteht sich, dass eine derartige Bördelung, insbesondere wenn sie in vorbeschriebener Weise einer Fixierung dient, auch unabhängig von den übrigen Merkmalen des Torsionsschwingungsdämpfers vorteilhaft ist.

Bei einer derartigen Anordnung kann das Blech zunächst an der entsprechenden Masse positioniert und anschließend derart verbördelt werden, dass zwischen dem Blech und der Masse ein derartiger Reibschluss entsteht. Es ist auch denkbar, dass das Blech zunächst vorgebördelt und dann entsprechend positioniert wird, bevor eine abschließende Bördelung zu einem derartigen Reibschluss führt.

Weist der Torsionsschwingungsdämpfer zumindest zwei Kammern auf, die jeweils an wenigstens einer ihrer Seiten zumindest teilweise durch ein Blech abgedeckt sind, ist es vorteilhaft, die beiden Blechabdeckungen aus demselben Material zu fertigen und die Kammern sowie die Blechabdeckungen derart auszugestalten, dass das eine Blech raclial innerhalb des anderen Blechs angeordnet werden kann, ohne dass die beiden Bleche einander überlappen. Dieses gilt insbesondere für Kammern, die durch um die Achse des Torsionsschwingungsdämpfers umlaufende Bleche abgedeckt werden.

Hierbei bezeichnet der Begriff "in gestrecktem Zustand", dass etwaige Abwinkelungen, Ausformungen oder ähnliches aus den Blechen entfernt gedacht sind.

Bei einer derartigen Anordnungen ist es möglich, dass beide Blechabdeckungen aus demselben Rohling gefertigt werden, bzw. dass die eine Blechabdeckung aus einem Rohling gefertigt wird, aus welchem eine Blechabdeckung, die der zweiten Blechabdeckung entspricht, gefertigt wurde. Auf diese Weise lassen sich zur Herstellung der Blechabdeckungen benötigte Materialmengen einsparen, da weniger Abfall entsteht.

Sind die Bleche aus einem einzigen Rohling ausgeformt, können sie dann - gegebenenfalls auch in einem einzigen Arbeitsschritt - entsprechend einer Formgebung unterzogen werden.

Es versteht sich, dass hierbei nicht unbedingt Blechabdeckungen, die aus einem identischen Rohling gefertigt wurden, an demselben Torsionsschwingungsdämpfer zu Anwendung kommen müssen. Vielmehr reicht es aus, dass die Blechabdeckungen eines Torsionsschwingungsdämpfers aus demselben Material bestehen und aus einem einigen Rohling gefertigt werden hätten können.

Es versteht sich, dass eine derartige Anordnung bzw. ein derartiges Herstellungsverfahren eines Torsionsschwingungsdämpfers auch unabhängig von den übrigen Merkmalen des Torsionsschwingungsdämpfers vorteilhaft ist, solange zwei Kammern durch Bleche abgedeckt werden sollen. Dieses insbesondere dann, wenn die Bleche um die Bleche des Torsionsschwingungsdämpfers umlaufen und die Kammern an verschiedenen radialen Abständen des Torsionsschwingungsdämpfers vorgesehen sind.

Darüber hinaus kann ein derartiges Blech, welches mit einer der Massen fest verbunden sein soll, zwischen zwei dieser Baugruppen fixiert werden. Dieses kann beispielsweise durch eine Schraubverbindung, die beiden Baugruppen miteinander fixiert, geschehen. Hierdurch braucht für das Fixieren kein extra Arbeitsschritt vorgesehen sein. Die hiermit gewonnene Montageerleichterung rechtfertigt einen höheren Aufwand, der für die Genauigkeitserhöhung, die durch ein Anstieg der Fertigungstoleranzen bedingt ist, benötigt wird. Dieses gilt insbesondere dann, wenn die beiden Baugruppen eine Lagerschale, vorzugsweise für die zweite Masse, bilden. Hierbei kann dann das Blech zumindest eine Seite der Lagerschale bilden. Da bei einer Lagerschale häufig Nacharbeiten vorgenommen werden müssen, um Montagetoleranzen auszugleichen, lassen sich die ansonsten unerwünschten Toleranzerhöhungen, die durch die unerwünschte Trennfuge in der Lagerschale bedingt sind, ausgleichen.

Ein derartiges Blech kann auch in einer Nut befestigt sein. Vorzugsweise ist eine derartige Nut radial nach innen gerichtet ausgebildet. Zur Montage braucht somit das Blech lediglich positioniert und wenigstens teilweise in die Nut verpresst werden. Um die Abdichtung des Pressblechs zu erhöhen, kann zwischen Blech und der entsprechenden, dieses Blech haltenden Baugruppe ein Dichtmittel eingebracht werden. Dieses können beispielsweise Silikonkautschuk oder andere gummielastische Dichtmittel sein. Ebenso kann eine Flächendichtung bzw. eine Papierdichtung vorgesehen sein.

Es versteht sich, dass auch eine derartige Fixierung des Blechs unabhängig von den übrigen Merkmalen des Torsionsschwingungsdämpfers vorteilhaft ist.

Weitere Vorteile, Ziele und Eigenschaften eines erfindungsgemäßen Torsionsschwingungsdämpfers werden anhand der Beschreibung anliegender Zeichnung erläutert. In der Zeichnung zeigen:
- Figur 1: einen erfindungsgemäßen Torsionsschwingungsdämpfer im Schnitt entlang der Linie I-I nach Figur 2,
- Figur 2: den Torsionsschwingungsdämpfer nach Figur 1 im Schnitt durch die Torsionsschwingungsdämpferachse,
- Figur 3: einen zweiten erfindungsgemäßen Torsionsschwingungsdämpfer in ähnlicher Darstellung wie Figur 1,
- Figur 4: eine Vergrößerung des Ausschnitts IV in Figur 3,
- Figur 5: den Torsionsschwingungsdämpfer nach Figur 3 im Schnitt durch die Torsionsschwingungsdämpferachse (mit verschiedenen Darstellungen der Keile; einem mittigen Schnitt, einem Schnitt durch die Vorsprünge sowie einer Aufsicht),
- Figur 6: einen dritten Torsionsschwingungsdämpfer in ähnlicher Darstellung wie Figuren 1 und 3,
- Figur 7: einen vierten Torsionsschwingungsdämpfer in ähnlicher Darstellung wie Figur 4, bei welchem ein Abdeckblech noch nicht befestigt ist und
- Figur 8: den Torsionsschwingungsdämpfer nach Figur 7 nach dem Einpressen des Abdeckblechs.

Jeder der in der Zeichnung dargestellte Torsionsschwingungsdämpfer weist eine Primärmasse 1 sowie eine Sekundärmasse 2 auf, die über eine Feder-Reib-Einrichtung 3 miteinander wirkverbunden sind. Hierbei ist die Sekundärmasse 2 in einer Lagerschale, die durch eine zweite Baugruppe 4 der Primärmasse 1 gebildet wird, drehbeweglich bezüglich der Primärmasse 1 gelagert. Derartige Torsionsschwingungsdämpfer sind an sich bekannt.

Erfindungsgemäß weist jeder dieser Torsionsschwingungsdämpfer Keile 5 auf, die in einer entsprechenden Kammer 6 angeordnet sind. Die Kammer 6 weist eine radial außenliegende zylindrische Reibfläche auf, an welcher die Keile 5 anliegen. Wie unmittelbar ersichtlich, können diese Keile bei zu vernachlässigender Reibung beliebig, insbesondere aber im Bereich der durch die Federeinrichtungen 3 ermöglichten Amplitude, mitgeschleppt werden.

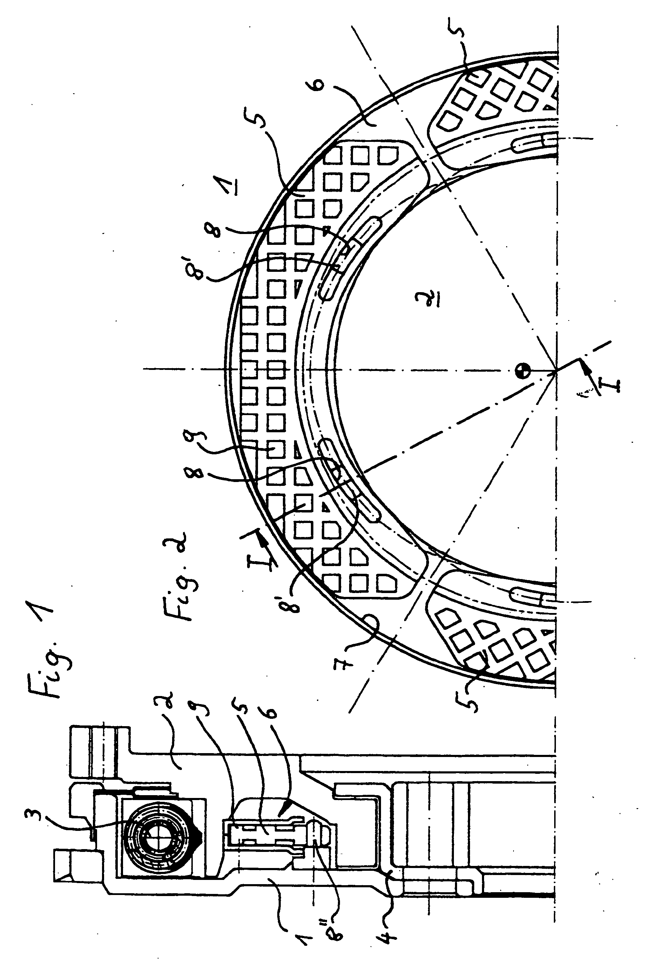

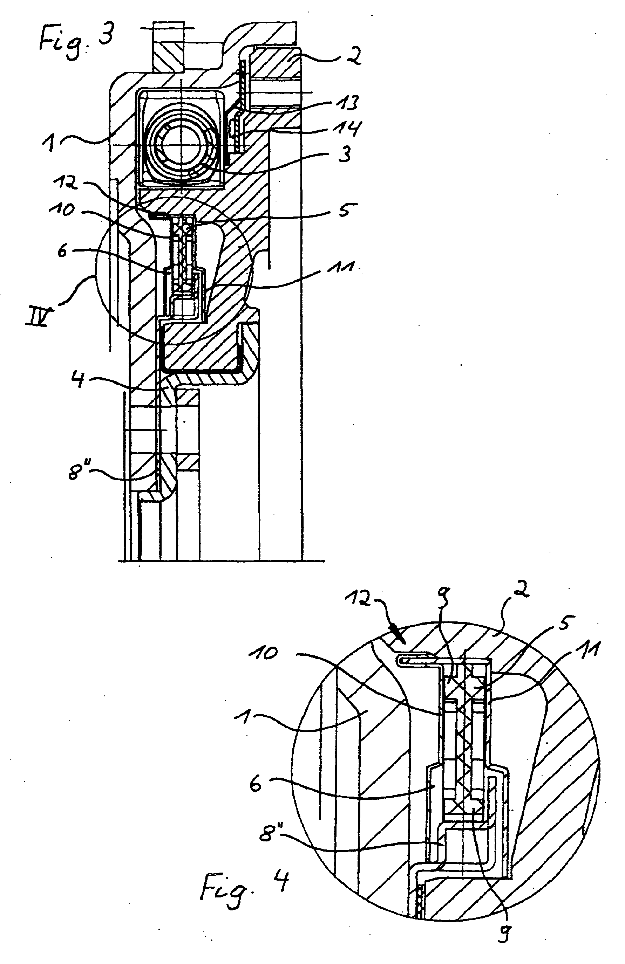

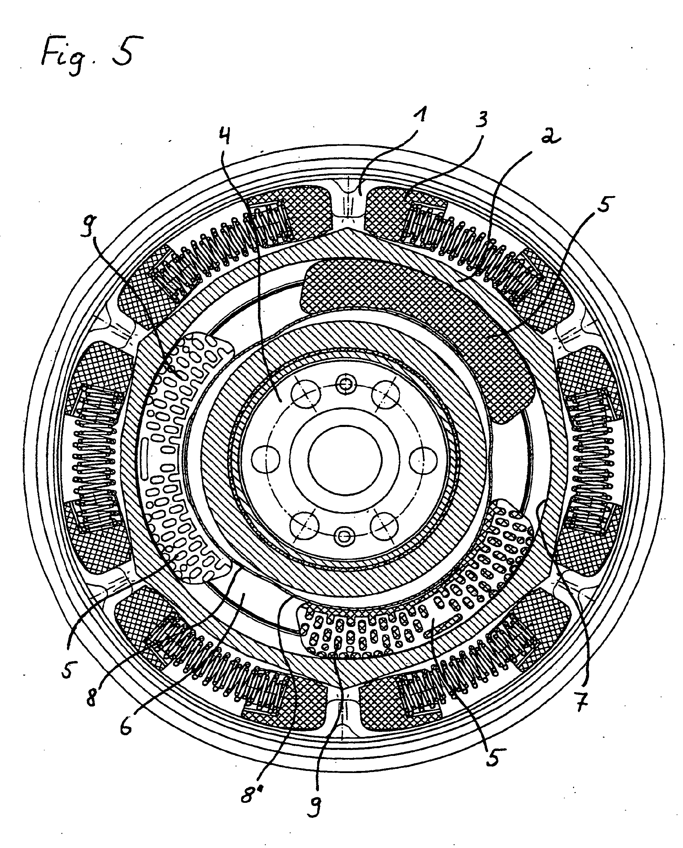

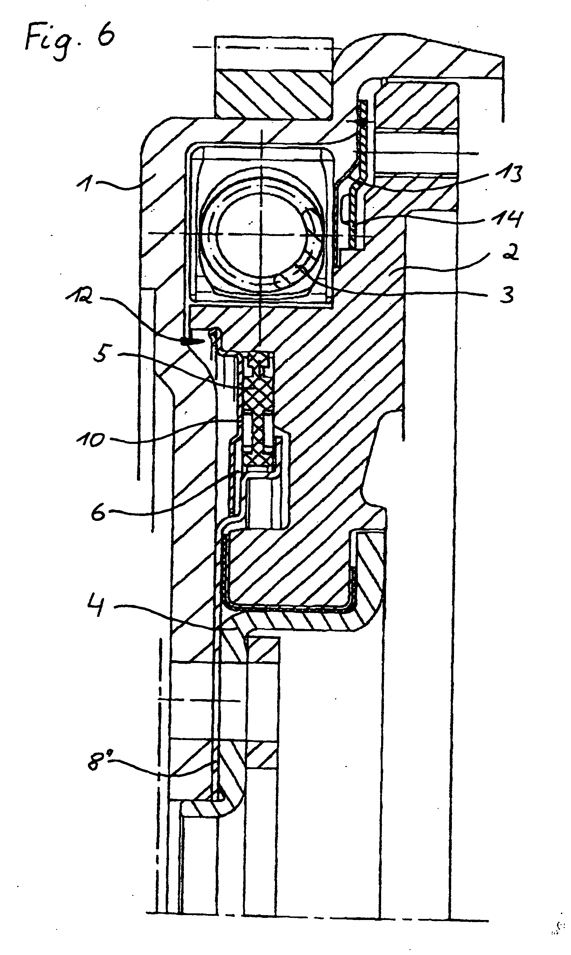

Darüber hinaus weist die Reibeinrichtung jedes der Torsionsschwingungsdämpfer Reibflächen 8 auf, die teilzylinderförmig, bezüglich der Rotationsachse des Torsionsschwingungsdämpfers parallel versetzt angeordnet sind. Hierbei sind diese Reibflächen bei dem in Figuren 1 und 2 dargestellten Ausführungsbeispiel an Mitnehmern 8' vorgesehen, die in entsprechende Ausnehmungen der Keile 5 eingreifen. Bei den in Figuren 3 bis 6 dargestellten Ausführungsbeispielen sind diese Reibflächen 8 an einer profilierten Blechscheibe 8" ausgestaltet, die zwischen den beiden Baugruppen 1 und 4 der Primärmasse angeordnet ist.

Wie unmittelbar ersichtlich ist jeder der Keile 5 als Doppelkeil ausgebildet und weist jeweils vier teilzylinderförmige Keilflächen auf. Hierbei weisen die radial außenliegenden Keilflächen denselben Radius wie die radial außenliegende Reibfläche 7 auf, wobei jedoch die Zylinderachse gegenüber der Achse des Torsionsschwingungsdämpfers parallel versetzt ist.

Wie ersichtlich, weist die Reibeinrichtung keine federnden Baugruppen auf, so dass sie bis auf die Eigenelastizität der Keile 5 bzw. der die Reibflächen 7 und 8 bildenden Baugruppen, starr ausgebildet ist.

Die Doppelkeile 5 weisen im Wesentlichen eine Nierenform auf, wobei durch die versetzten Zylinderachsen der äußeren Keilflächen eine Verkippung der Doppelkeile 5 bei einer Relativbewegung von Primärmasse 1, 4 und Sekundärmasse erfolgt. Zwischen den äußeren Keilflächen jedes Doppelkeils 5 sind Übergangsbereiche vorgesehen. Diese sind bei dem in Figuren 1 und 2 dargestellten Ausführungsform als rechteckförmige Fläche ausgestaltet, während bei den in Figuren 3 bis 6 dargestellten Ausführungsformen eine Zylinderfläche mit einem kleineren Radius als dem Radius der Reibfläche 7 gewählt ist. Diese Verbindungsfläche ist in Ihrem Radius sowie in Ihrer Achse derart angeordnet, dass am Übergang zwischen Verbindungsfläche und Keilfläche jeweils derselbe Neigungswinkel bzw. dieselbe Tangente auftritt.

Die Kammer 6 ist jeweils teilweise mit einem viskosen Zusatzmittel gefüllt. Darüber hinaus weist jeder der Keile 5 Vorsprünge 9 auf, die in axiale Richtung weisen. Hierdurch entstehen Oberflächenbereiche, die den Scherkräften des viskosen Zusatzmittels entgegenwirken, so dass der erfindu ngsgemäße Doppelkeil ohne Freispiel wirksam wird. Die Vorsprünge 9 sind dabei derart ausgebildet, dass sie bis an radiale Wandungen der Kammer 6 reichen, so dass auch an diesen Stellen eine Reibung gegeben ist. Zwischen den Vorsprüngen 9 entstehen Zwischenräume, die eine erhöhte Aufnahmekapazität für das viskose Zusatzmittel ermöglichen.

Wie aus Figuren 3, 4 und 6 ersichtlich, ist die Kammer 6 der in den Figuren 3 bis 6 dargestellten Ausführungsbeispiele in axialen Richtungen durch Bleche 10 bzw. 11 umgrenzt. Diese Bleche sind mit einer Bördelung 12 versehen, wobei diese Bördelung einen radialen Reibschluss mit der Sekundärmasse 2 bildet und auf diese Weise die Bleche 10 bzw. 11 an der Sekundärmasse fixiert.

Bei dem in Figuren 3 bis 5 dargestellten Ausführungsbeispiel werden in einer Vormontage die beiden Bleche 10 und 11 zunächst vorgebördelt. Anschließend werden diese an der Sekundärmasse in gewünschter Weise positioniert. Erst hiernach wird die Bördelung 12 vollendet und auf diese Weise der Reibschluss zwischen den Blechen 10 bzw. 11 mit der Sekundärmasse 2 erzeugt.

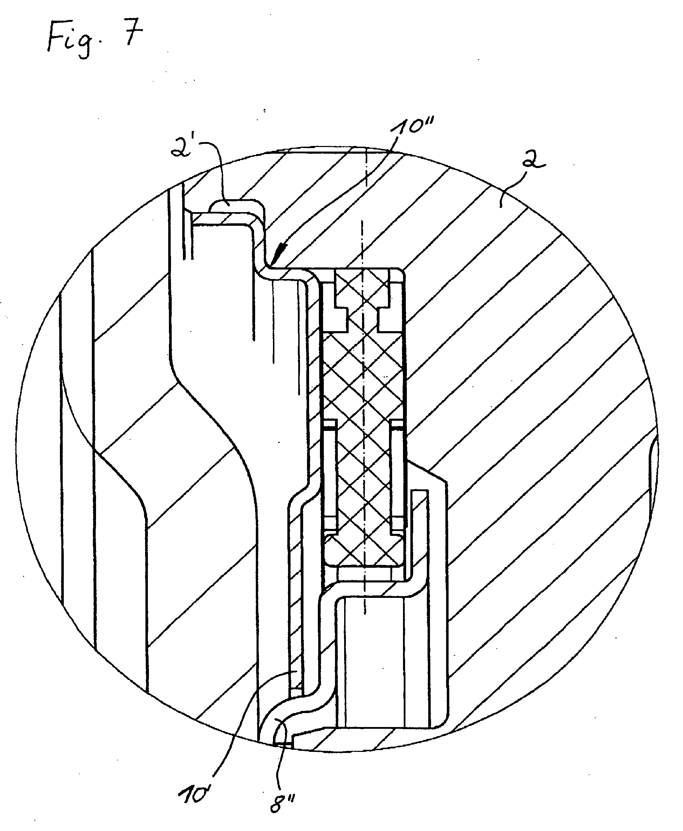

In ähnlicher Weise wird auch bei dem in Figur 6 dargestellten Ausführungsform das Blech 10 angebracht. Auch hier wird erst nach dem Positionieren des Bleches 10 der Reibschluss zwischen Sekundärmasse 2 und Blech 10 über die Bördelung 12 erzeugt.

Bei den in Figuren 3 bis 6 dargestellten Ausführungsbeispielen besteht das Blech 10 und ein Abdichtblech 13 für die Feder-Reib-Einrichtung 3 aus demselben Material. Selbiges gilt für das Blech 8" und ein Abdeckblech 14 der Feder-Reib-Einrichtung 3. Wie unmittelbar ersichtlich können die Bleche 10 und 13 bzw. 8" und 14 aus demselben Rohling gefertigt werden, so dass für die Bleche 8" bzw. 10 kein zusätzliches Material benötigt wird. Insofern ist für die erfindungsgemäße Reibeinrichtung bei dem in Figuren 3 bis 5 dargestellten Ausführungsbeispiel lediglich das Blech 11 als zusätzliche Kammerbegrenzung hinsichtlich des Materialaufwandes von Bedeutung. Bei dem in Figur 6 dargestellten Ausführungsbeispiel ist die Sekundärmasse in geeigneter Weise ausgeformt, so dass für die Kammerbildung 6 kein zusätzliches Material benötigt wird.

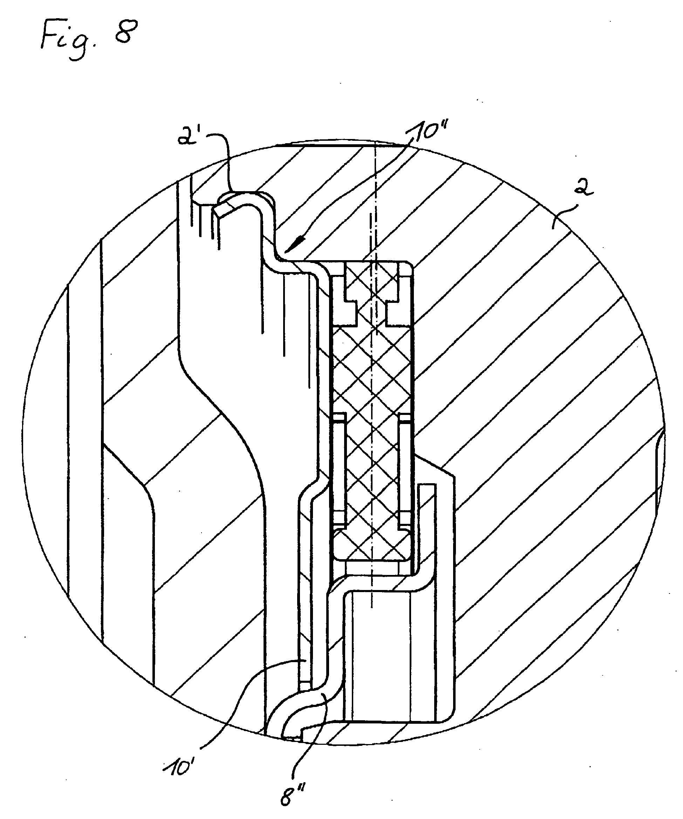

Bei dem in Figuren 7 und 8 dargestellten Ausführungsbeispiel ist ein Blech (10') in einer Nut (2') der Sekundärmasse (2) angeordnet. Hierbei zeigt Figur 7 die Anordnung vor dem Verpressen also unmittelbar nachdem das Blech (2') in seine Montageposition gebracht ist. Figur 8 zeigt die Anordnung nach dem Einpressen des Blechs (10') in die Nut (2'). Da eine derartige Einpressung nur an gewissen, um den Umfang verteilten Positionen erfolgt, zeigt Figur 7 die Anordnung an den Umfangspositionen, an denen eine Einpressung nicht vorliegt. Bei dieser Anordnung ist zur besseren Abdichtung in ein Knie (10") des Blechs (10') vor der Montage ein Dichtmittel, wie beispielsweise Silikonkautschuk, eingebracht.

## Patentansprüche

1. Verfahren zum Dämpfen von Torsionsschwingungen mittels eines Torsionsschwingungsdämpfer mit zwei gegeneinander drehbeweglich gelagerten Massen (1, 4; 2) und mit einer zwischen den Massen (1, 4; 2) wirksamen Reibeinrichtung, die wenigstens einen mitschleppenden Doppelkeil (5), der in einer wenigstens teilweise mit einem viskosen Zusatzmittel gefüllten Kammer (6) angeordnet ist, umfasst, ***dadurch gekennzeichnet, dass*** bei einer Relativbewegung der beiden Massen (1, 4; 2) der Doppelkeil bezüglich einer Achse des Torsionsschwingungsdämpfers gekippt wird.

2. Verfahren nach Anspruch 1, ***dadurch gekennzeichnet, dass*** der Doppelkeil zwei Reibflächen (7) mit einer dazwischen angeordneten Verbindungsfläche aufweist, die derart ausgebildet ist, dass am Übergang zwischen der Verbindungsfläche und den Reibflächen jeweils derselbe Neigungswinkel bzw, dieselbe Tangente auftritt.

3. Torsionsschwingungsdämpfer mit zwei gegeneinander drehbeweglich gelagerten Massen (1, 4; 2) und mit einer zwischen den Massen (1, 4; 2) wirksamen Reibeinrichtung, die wenigstens einen mitschleppenden Doppelkeil (5) umfasst, der in einer wenigstens teilweise mit einem viskosen Zusatzmittel gefüllten, Wände aufweisenden Kammer (6) angeordnet ist, ***dadurch gekennzeichnet, dass*** der Doppelkeil (5) derart angeordnet ist, dass er bei einer Relativbewegung der beiden Massen (1, 4; 2) eine Kippbewegung bezüglich einer Achse des Torsionsschwingungsdämpfers ausführt.

4. Torsionsschwingungsdämpfer nach Anspruch 3, ***dadurch gekennzeichnet, das*** der Keil (5) zwischen zwei Reibflächen (7, 8) mit im Wesentlichen axialer Oberfläche angeordnet ist, die zumindest im Bereich der Wechselwirkung zwischen Keil (5) und Reibfläche (7, 8) teilzylinderförmig ausgebildet und bezüglich einer Rotationsachse des Torsionsschwingungsdämpfers parallelversetzt angeordnet sind.

5. Torsionsschwingungsdämpfer nach Anspruch 3 oder 4, ***dadurch gekennzeichnet, dass*** der Doppelkeil (5) wenigstens einen Vorsprung (9) aufweist, der von dem Doppelkeil (5) aus in Richtung auf eine Wand der Kammer (6) weist und an einer anderen Seite als der Keilfläche vorgesehen ist.

6. Torsionsschwingungsdämpfer nach einem der Ansprüche 3 bis 5 ***dadurch gekennzeichnet, dass*** der Doppelkeil zwei Reibflächen (7) mit einer dazwischen angeordneten Verbindungsfläche aufweist, die derart ausgebildet ist, dass am Übergang zwischen der Verbindungsfläche und den Reibflächen jeweils derselbe Neigungswinkel bzw. dieselbe Tangente auftritt

7. Torsionsschwingungsdämpfer nach einem der Ansprüche 5 bis 6, ***gekennzeichnet durch*** eine Vielzahl an Vorsprüngen.

8. Torsionsschwingungsdämpfer nach einem der Ansprüche 5 bis 7, ***dadurch gekennzeichnet, dass*** der Vorsprung in axiale Richtung weist.

9. Torsionsschwingungsdämpfer nach Anspruch 8, ***dadurch gekennzeichnet, dass*** der Vorsprung bis an eine radiale Wand der Kammer (6) reicht.

10. Torsionsschwingungsdämpfer nach einem der Ansprüche 5 bis 8, ***dadurch gekennzeichnet, dass*** der Vorsprung bis an eine Wand der Kammer (6) reicht.

## Claims

1. A method for damping torsional vibrations by means of a torsional vibration damper with two mutually rotatable masses (1, 4; 2) and a friction device that acts between the masses (1, 4; 2) and comprises at least one motion-coupled double wedge (5) arranged in a chamber (6) that is at least partially filled with a viscous additive, **characterized in that** the double wedge is tilted relative to an axis of the torsional vibration damper during a relative movement between the two masses (1, 4; 2).

2. The method according to Claim 1, **characterized in that** the double wedge features two friction surfaces (7) with a connecting surface arranged therebetween, wherein said connecting surface is realized in such a way that the same angle of inclination and the same tangent are respectively formed at the transition between the connecting surface and the friction surfaces.

3. A torsional vibration damper with two mutually rotatable masses (1, 4; 2) and a friction device that acts between the masses (1, 4; 2) and comprises at least one motion-coupled double wedge (5) arranged in a chamber (6) that is at least partially filled with a viscous additive and features walls, **characterized in that** the double wedge (5) is arranged in such a way that it carries out a tilting movement relative to an axis of the torsional vibration damper during a relative movement between the two masses (1, 4; 2).

4. The torsional vibration damper according to Claim 3, **characterized in that** the wedge (5) is arranged between two friction surfaces (7, 8) with essentially axial face which are realized in a partially cylindrical fashion at least in the region in which the wedge (5) and the friction surface (7, 8) interact and arranged such that they are offset parallel to a rotational axis of the torsional vibration damper.

5. The torsional vibration damper according to Claim 3 or 4, **characterized in that** the double wedge (5) features at least one projection (9) that points from the double wedge (5) in the direction of a wall of the chamber (6) and is arranged on a different side than the wedge surface.

6. The torsional vibration damper according to one of Claims 3 to 5, **characterized in that** the double wedge features two friction surfaces (7) with a connecting surface arranged therebetween, wherein said connecting surface is realized in such a way that the same angle of inclination and the same tangent are respectively formed at the transition between the connecting surface and the friction surfaces.

7. The torsional vibration damper according to Claims 5 to 6, **characterized by** a multitude of projections.

8. The torsional vibration damper according to one of Claims 5 to 7, **characterized in that** the projection points in the axial direction.

9. The torsional vibration damper according to Claim 8, **characterized in that** the projection extends as far as a radial wall of the chamber (6).

10. The torsional vibration damper according to one of Claims 5 to 8, **characterized in that** the projection extends as far as a wall of the chamber (6).

## Revendications

1. Procédé d'amortissement d'oscillations de torsion au moyen d'un amortisseur d'oscillations de torsion comportant deux masses rotatives tournant en sens opposé (1, 4 ; 2) ainsi qu'un dispositif de friction disposé entre les masses (1, 4 ; 2) comprenant au moins un double coin d'entraînement (5) agencé dans une chambre (6) remplie au moins partiellement d'un mélange visqueux, ***caractérisé* en ce que** le double coin est basculé par rapport à un axe de l'amortisseur d'oscillations de torsion lors d'un déplacement relatif des deux masses (1, 4 ; 2).

2. Procédé selon la revendication 1, ***caractérisé* en ce que** le double coin comporte deux surfaces de friction (7), entre lesquelles est disposée une surface de jonction constituée de telle manière que le même angle d'inclinaison ou la même tangente est toujours présent à la transition entre la surface de jonction et les surfaces de friction.

3. Amortisseur d'oscillations de torsion comportant deux masses rotatives tournant en sens opposé (1, 4 ; 2) ainsi qu'un dispositif de friction disposé entre les masses (1, 4 ; 2) comportant au moins un double coin d'entraînement (5) agencé dans une chambre (6) comportant des parois et remplie au moins partiellement d'un mélange visqueux, ***caractérisé* en ce que** le double coin (5) est disposé de telle façon qu'il effectue un mouvement de basculement par rapport à un axe de l'amortisseur d'oscillations de torsion lors d'un déplacement relatif des deux masses (1, 4 ; 2).

4. Amortisseur d'oscillations de torsion selon la revendication 3, ***caractérisé* en ce que** le coin (5) est disposé entre deux surfaces de friction (7, 8) essentiellement axiales de forme au moins partiellement cylindrique dans la zone d'interaction entre le coin (5) et les surfaces de friction (7, 8) et décalées parallèlement par rapport à un axe de rotation de l'amortisseur d'oscillations de torsion.

5. Amortisseur d'oscillations de torsion selon la revendication 3 ou 4, ***caractérisé* en ce que** le double coin (5) comporte au moins une projection (9) dirigée depuis le double coin (5) en direction d'une paroi de la chambre (6) et dont une autre face constitue la surface de travail du coin.

6. Amortisseur d'oscillations de torsion selon l'une quelconque des revendications 3 à 5, ***caractérisé* en ce que** le double coin comporte deux surfaces de friction (7) entre lesquelles est disposée une surface de jonction, constituée de telle manière que le même angle d'inclinaison ou la même tangente est toujours présent à la transition entre la surface de jonction et les surfaces de friction.

7. Amortisseur d'oscillations de torsion selon l'une quelconque des revendications 5 à 6, ***caractérisé* par** une pluralité de projections.

8. Amortisseur d'oscillations de torsion selon l'une quelconque des revendications 5 à 7, ***caractérisé* en ce que** la projection est disposée en direction axiale.

9. Amortisseur d'oscillations de torsion selon la revendication 8, ***caractérisé* en ce que** la projection atteint une paroi radiale de la chambre (6).

10. Amortisseur d'oscillations de torsion selon l'une quelconque des revendications 5 à 8, ***caractérisé* en ce que** la projection atteint une paroi de la chambre (6).
